# EUROPÄISCHE PATENTSCHRIFT

(11) **EP 1 309 479 B1**
(45) Veröffentlichungstag und Bekanntmachung des Hinweises auf die Patenterteilung: **03.12.2003**
(21) Anmeldenummer: 01960125.1
(22) Anmeldetag: 27.07.2001
(51) Int. Cl.: B60T 7/06

(54) **SICHERHEITSEINRICHTUNG IM PEDALBEREICH FÜR EINEN PKW**
SAFETY DEVICE IN THE PEDAL REGION OF A MOTOR CAR
SYSTEME DE SECURITE AU NIVEAU DE LA PEDALE POUR UNE AUTOMOBILE

(30) Priorität: 17.08.2000 DE 10040270
(43) Veröffentlichungstag der Anmeldung: 14.05.2003
(73) Patentinhaber: Edscha Betätigungssysteme GmbH, 94491 Hengersberg (DE)
(72) Erfinder: OPRISCH, Christine, Margarete, 94577 Winzer (DE)
(74) Vertreter: Sparing, Rolf Klaus
(86) Internationale Anmeldenummer: DE0102694
(87) Internationale Veröffentlichungsnummer: WO02014129

(56) Entgegenhaltungen:
- EP-A- 1 031 485
- EP-A- 1 074 445
- DE-A- 4 344 386
- DE-A- 19 631 868
- PATENT ABSTRACTS OF JAPAN vol. 2000, no. 15, 6. April 2001 (2001-04-06) & JP 2000 344064 A (SUZUKI MOTOR CORP), 12. Dezember 2000 (2000-12-12)
- PATENT ABSTRACTS OF JAPAN vol. 1998, no. 13, 30. November 1998 (1998-11-30) & JP 10 226325 A (TOYOTA MOTOR CORP), 25. August 1998 (1998-08-25)

## Beschreibung

Die Erfindung betrifft eine Pedallagerung gemäß dem Obergriff des Patentanspruchs 1.

Derartige Pedallagerungen sind im Stand der Technik bekannt. Die nachveröffentlichte DE 100 16 347 A1 offenbart eine Pedallagerung mit einer in Achsrichtung beabstandete Teilachsen aufweisenden Pedalachse und einem Lagerbock, in dem die Pedalachse umschlossen gelagert ist, wobei die aus zwei Halbachsen bestehende Pedalachse alternativ am Pedalhebel oder Lagerbock integriert ausgeführt ist. Bei derartigen Pedallagerungen wird der Lagerbock üblicherweise an der vorderen Spritzwand der Karosserie befestigt, die den Fußraum in Kraftfahrzeugen, der auch der Bauraum für Pedalwerke ist, in Fahrtrichtung von vorne abtrennt. Die Spritzwand gehört zu den Karosserieteilen, die bei einem Unfall, insbesondere einem frontalen Crash, verformungsgefährdet sind und in den Fußraum hineingedrückt werden. Dadurch besteht die Gefahr, daß der an der Spritzwand befestigte Lagerbock und das in ihm gelagerte Pedal in Richtung der Beine des Fahrers gedrückt werden. Damit entsteht eine erhöhte Verletzungsgefahr für Beine oder Füße des Fahrers.

Eine eingangs beschriebene Pedallagerung ist aus DE 196 31 868 A1 bekannt. Darin wird eine Anordnung zur Lagerung eines hängend angeordneten Pedalhebels offenbart, die aus einem Lagerbock, der der an der Spritzwand eines Kraftfahrzeuges befestigt ist und aus zwei Längsstreben besteht, an deren Innenseiten sich Lagerstummel befinden, auf denen die hohl ausgebildete Pedalachse aufgesteckt ist. Weiter ist eine Spreizeinrichtung vorgesehen, die beispielsweise als Keil mit Gleitflächen und Abstützpunkten für den Keil an den fußraumseitigen Enden der Streben ausgebildet ist. Die Abstützpunkte gleiten im Kollisionsfall an den Gleitflächen entlang, wodurch die Längsstreben auseinander gedrückt und die Achsstummel aus der Hohlachse heraus gezogen werden, so daß die Pedalachse nach unten ausweichen kann.

In der DE 43 44 386 A1 wird ein Pedalwerk für ein Fahrzeug offenbart, das eine Pedalstrebe mit zwei beabstandet zueinander angeordneten Strebenschenkein aufweist, zwischen denen ein Pedal schwenkbar gelagert ist, wobei eine Pedalachse mit ihren beiden Enden in zur Pedalachse hin offene Achslager eingesetzt und die Pedalstrebe im Bereich ihrer beiden Enden mit Aufnahmen zum Befestigen des Pedalwerks zwischen stationären Bauteilen des Fahrzeuges versehen ist. Jeder Strebenschenkel weist einen Umformbereich auf, wobei die mit den Strebenschenkeln verbundenen Achslager bei überschreiten einer Kraft, die über mindestens eines der stationären Bauteile in die Pedalstrebe eingeleitet wird, außer Eingriff mit der Pedalachse gelangen. Indem das Pedal außer Eingriff gelangt, ist sichergestellt, daß im Kollisionsfall eine Verletzungsgefahr des Fahrers weitgehend ausgeschlossen ist.

Das der Erfindung zugrunde liegende technische Problem besteht darin, eine eingangs beschriebene Pedallagerung so auszuführen, daß die Pedallagerung einfach, aus wenigen Teilen aufgebaut und im Normalbetriebsfall funktionssicher ist und im Crashfall das Verletzungsrisiko für den Fahrer durch in den Fußraum hineinragende verschobene Pedale vermieden oder zumindest vermindert wird.

Dieses Problem wird ausgehend von der eingangs beschriebenen Pedallagerung durch eine Pedallagerung mit der Merkmalskombination gemäß Patentanspruch 1 gelöst.

Eine derartige Pedallagerung hat den Vorteil, daß sie einfach ist, aus wenigen Teilen besteht, leicht zu montieren und im normalen Betrieb funktionssicher ist, wobei die Teilachsen der Pedalachse für den Fall, daß das Karosserieteil, an dem der Lagerbock befestigt ist, in den Fußraum hinein verformt wird, aus ihrer Lagerung im Lagerbock gelöst werden, so daß das Pedal losgelöst auf den Boden des Fußraumes fallen kann. Damit ist die Verletzungsgefahr für den Fahrer des Kfz im Falle eines Crashs, insbesondere eines Frontalaufpralls, wesentlich vermindert. Erfindungsgemäß werden für die Lösung zwei alternative Vorschläge unterbreitet.

Der Vorschlag gemäß Patentanspruch 2 sieht vor, daß zwischen den Teilachsen in Achsrichtung mindestens eine gespannte Druckfeder angeordnet ist und gegen die inneren Stirnflächen der Teilachsen anliegt, daß die parallelen Schenkel der Klammer fest mit dem Bügel verbunden sind und die Teilachsen an ihrem über die Seitenwände des Lagerbocks nach außen überstehenden Ende ein verdicktes Ende ausweisen, das mit den parallelen Schenkeln eine Vorrichtung zur lösbaren Festlegung der Teilachsen an den Schenkel bildet. Dabei wird im Falle einer Verformung der Spritzwand in den Fußraum hinein die Festlegung der Teilachsen gelöst, so daß die in Achsrichtung wirkende Federkraft die Teilachsen aus der Lagerung im Lagerbock auswerfen kann. In den Patentansprüchen 3 und 4 werden Ausführungsformen für diesen Lösungsvorschlag beschrieben.

Ein anderer Lösungsvorschlag sieht gemäß Patentanspruch 5 vor, daß die parallelen Klammerschenkel federnd sind und in Verformungsrichtung hinter der Verbindungsstelle mit den Teilachsen schräg zu den Lagerbockseitenwänden V-förmig auseinanderlaufend abgebogen sind und an Stirnseiten der in gleicher Richtung angeordneten, komplementär zu den Klammerschenkeln verlaufenden Endabschnitte des Bügels anliegen. Diese Lösung funktioniert derart, daß bei einer Verformung der Spritzwand in den Fußraum hinein der Lagerbock und mit ihm die umschlossen gelagerten Teilachsen in Verformungsrichtung verschoben werden, während der an einem crashstabilen Karosserieteil befestigte Bügel ortsfest bleibt und die sich auf ihn zubewegenden Klammerschenkel gegen die Federwirkung nach außen spreizt und dabei die Teilachsen aus ihrer umschlossenen Lagerung herauszieht, bis die Teilachsen frei sind.

In einer Ausführungsform gemäß Patentanspruch 6 bewirkt die wulstförmige Ausbuchtung der Klammerschenkel, daß die Klammerschenkel in einem Abstand von den Seitenwänden des Lagerbocks angeordnet sind. Der Abstand sollte mindestens der Länge des verdickten Endes der Teilachsen entsprechen. Damit ist gewährleistet, daß die Teilachsen normal zu den Seitenwänden des Lagerbocks gehalten werden und nicht verkanten. Die wulstförmige Ausbuchtung hat darüber hinaus den Vorteil, daß sie versteifend auf die federnden Klammerschenkel wirkt und wegen der Verkleinerung der Kontaktflächen die Reibkräfte reduziert.

Die erwähnten und weiteren Vorteile werden bei der weiteren Beschreibung von Ausführungsbeispielen verdeutlicht, die in beigefügter Zeichnung dargestellt sind. Darin zeigt
- Fig. 1: eine Pedallagerung im Ausgangszustand in einer Ansicht von unten;
- Fig.2: einen Endabschnitt einer Klammer gemäß dem Ausschnitt II in Fig. 1 in perspektivischer Darstellung;
- Fig.3: die Pedallagerung entsprechend Fig. 1, jedoch in eingedrücktem Zustand nach Crash und
- Fig.4: eine andere Ausführungsform einer Pedallagerung in perspektivischer Darstellung.

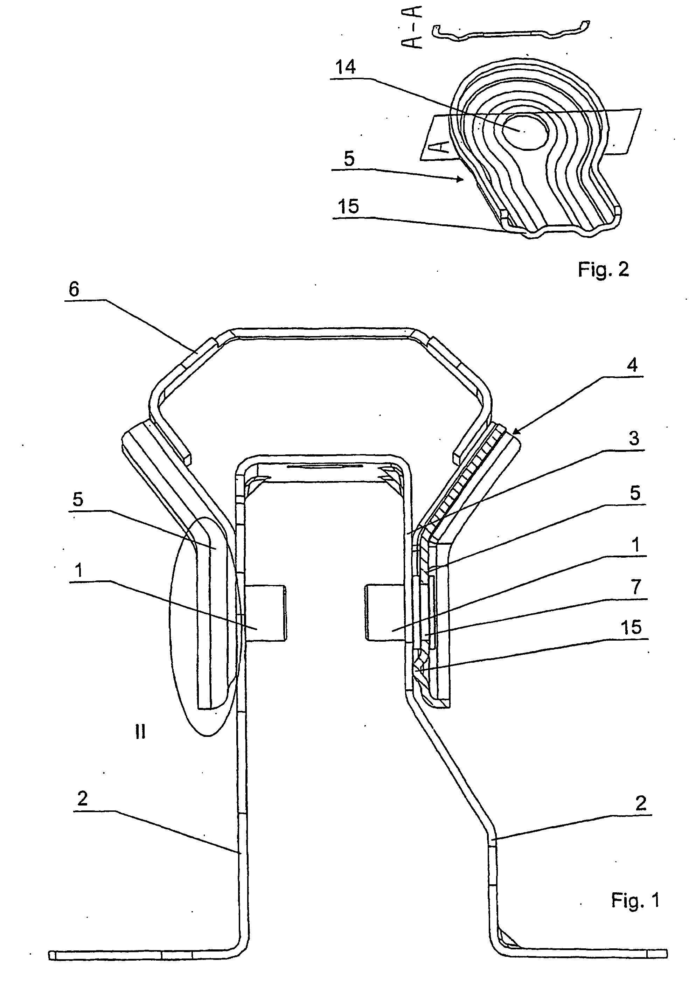

Die in Fig.1 dargestellte Pedallagerung besteht aus Teilachsen 1, einem Lagerbock 2, der mittels unteren, rechtwinklig abgebogenen Schenkeln an einem crashverformbaren Karosserieteil, beispielsweise an der vorderen Spritzwand vor dem Fußraum eines Kfz, befestigt ist. Im Lagerbock 2 sind die Teilachsen 1 umschlossen gelagert. Die Teilachsen 1 sind an den parallelen Schenkeln 5 einer federnden Klammer 4 befestigt. Die rechts und links des Lagerbocks 2 angeordneten Teile der Klammer 4 sind durch ein nicht dargestelltes Teil der Klammer 4 derart verbunden, daß die parallelen Schenkel 5 außen vorgespannt an den Seitenwänden des Lagerbocks 2 anliegen. Das Verbindungsteil kann beispielsweise oberhalb oder unterhalb der Darstellungsebene verlaufen. Die Befestigung der Teilachsen 1 an den parallelen Schenkeln 5 kann auf vielfache Art erfolgen, beispielsweise durch Nietung, Schweißung oder Festklemmen. Die Befestigung der Teilachsen 1 ist an den auf der Außenseite des Lagerbocks 2 angeordneten verdickten Enden 7 ausgeführt. Die gegenüberliegend in den Innenraum des Lagerbocks 2 hineinragenden Abschnitte der Teilachsen 1 sind normal zu den Seitenwänden des Lagerbocks 2 angeordnet und fluchten miteinander.

In Betrachtungsrichtung von den Befestigungsschenkeln des Lagerbocks 2 aus und damit in Verformungsrichtung für den Fall eines Crashs sind die parallelen Schenkel 5 hinter der Verbindungsstelle mit den Teilachsen 1 schräg zu den Seitenwänden des Lagerbocks 2 V-förmig auseinanderlaufend abgebogen. Die V-förmig abgebogenen Abschnitte der Klammer 4 liegen an Stirnseiten eines Bügels 6 an. Dieser Bügel 6 ist an einem crashstabilen Karosserieteil, beispielsweise an einem Querträger, befestigt. Die Abschnitte des Bügels 6, an denen die V-förmig abgebogenen Abschnitte der Klammer 4 anliegen, verlaufen in gleicher Richtung. Die beiden aneinander anliegenden Abschnitte von Klammer 4 und Bügel 6 sind komplementär verformt. Im oberen Bereich der Darstellung des Bügels 6 ist in dieser Ansicht von unten ein Abschnitt des Bügels 6 zu erkennen, der gegenüber seinen Nachbarabschnitten eine geringere Höhe aufweist. Dieser Höhenabsatz soll dafür sorgen, daß der Lagerbock 2 im Fall einer crashbedingten Verformung nicht gegen den Bügel 6 stößt, sondern sich unter diesem hindurch bewegen kann.

Die Funktion der Pedallagerung im Crashfall ist so vorgesehen, daß bei einer Verformung der Spritzwand sich diese und damit der an ihr befestigte Lagerbock 2 in Richtung des Bügels 6 bewegt. Da die Teilachsen 1 im Lagerbock 2 umschlossen gelagert und an den parallelen Schenkeln 5 der Klammer 4 befestigt sind, wird auch die Klammer 4 in derselben Richtung bewegt. Da die V-förmig abgebogenen Abschnitte der Klammer 4 an den Stirnflächen der parallel verlaufenden Endabschnitte des an einem crashstabilen Karosserieteil befestigten Bügels 6 anliegen, werden die parallelen Schenkel 5 der Klammer 4 bei dieser Vorwärtsbewegung auseinander gespreizt. Sobald diese Spreizung die Länge der in den Innenraum des Lagerbocks 2 hineinragenden Abschnitte der Teilachsen 1 überschreitet, lösen sich die Teilachsen 1 aus der Lagerung im Lagerbock 2.

Sobald die Teilachsen 1 aus der Lagerung entfernt sind und nicht mehr in den Innenraum des Lagerbocks 2 hineinragen, hat der an den Teilachsen 1 gelagerte Pedalhebel (nicht dargestellt) keinen Halt mehr und fällt frei in den Fußraum des Kfz. Damit ist die crashbedingte Verletzungsgefahr des Fahrers. durch in den Fußraum hineinragende Pedalhebel beseitigt.

In Fig. 2 ist ein Endabschnitt der parallelen Schenkel 5, der in etwa dem Ausschnitt II in Fig. 1 entspricht, in einer Perspektivansicht dargestellt. Die Seitenränder des hier dargestellten parallelen Schenkels 5 sind senkrecht nach oben umgebogen. Das Ende des Schenkels 5 ist abgerundet und weist in der Mitte dieses abgerundeten Endes eine Verbindungsbohrung 14 auf, die sich für die Befestigung, beispielsweise für die Vernietung, des verdickten Endes der Teilachsen 1 eignet. Parallel zu den Ränder verläuft eine wulstartige Ausbuchtung, die auf mindestens drei Seiten rund um die Verbindungsbohrung 14 verläuft. Die wulstförmige Ausbuchtung wirkt versteifend auf die federnden Klammerschenkel.
Anhand der Darstellung in Fig. 2 ist die Ausbildung von Klammer 4 und parallelem Schenkel 5, die auf der rechten Seite der Darstellung in Fig. 1 geschnitten dargestellt ist, gut verständlich. Die Klammer 4 liegt mit den Kuppen der wulstförmigen Ausbuchtung 15 außen an den Seitenwänden des Lagerbocks 2 sowie an den Stirnflächen der abgebogenen Enden des Bügels 6 an. Durch die minimale Kontaktfläche zwischen den Kuppen und den abstützenden Flächen wird die Reibkraft zwischen den Teilen entsprechend reduziert. Die Höhe der wulstförmigen Ausbuchtung 15 ist im dargestellten Ausführungsbeispiel so gewählt, daß sie größer ist als die Dicke des am Lagerbock 2 anliegenden Teil des verdickten Endes der Teilachsen 1. Dadurch wird ein Verkanten der Teilachsen 1 durch die parallelen Schenkel, an denen die Teilachsen 1 befestigt sind und die durch ihre Vorspannung gegen die äußeren Seitenwände 3 des Lagerbocks 2 drücken, vermieden. Dies ist insofern wichtig, als ein solches Verkanten zu einem Klemmen bei dem Herausziehen der Teilachsen 1 aus ihrer umschließenden Lagerung im Lagerbock 2 führen könnte.

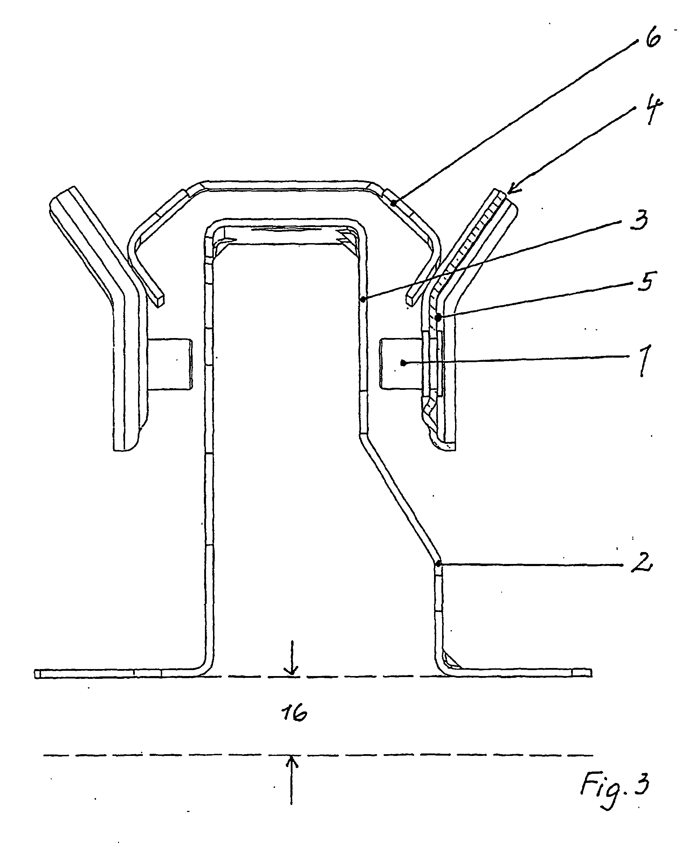

In Fig. 3 ist die Pedallagerung entsprechend Fig. 1 in einer Position dargestellt, wie sie sich nach einer crashbedingten Verformung des Karosserieteils, an dem der Lagerbock befestigt ist, ergibt. Die mit gestrichelten Linien angedeutete Spritzwand, an der der Lagerbock 2 mit seinen senkrecht abgewinkelten Schenkeln befestigt ist, ist im dargestellten Fall um den crashbedingten Verformungsweg 16 in Richtung des Bügels 6 verschoben worden. Durch diese Verschiebung wird die Klammer 4 und damit ihre parallelen Schenkel 5 so weit auseinandergespreizt, daß die Teilachsen 1 aus ihrer umschließenden Lagerung im Lagerbock 2 gelöst werden. Der vorher an den in den Innenraum des Lagerbocks 2 hineinragenden Abschnitte der Teilachsen 1 gelagerte Pedalhebel verliert damit sein Auflager und kann sich frei bewegen. Er fällt auf den Boden des Fußraumes und ragt nicht mehr an der Karosserie befestigt in den Fußraum hinein.

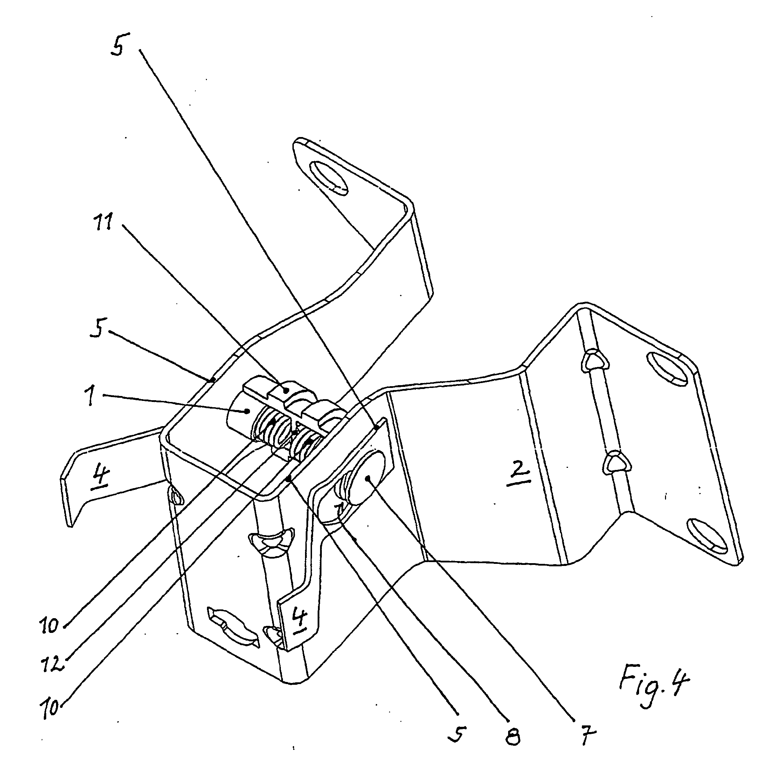

In Fig. 4 ist eine andere Ausführungsform einer erfindungsgemäßen Pedallagerung dargestellt. Hierbei weisen die verdickten Enden der Teilachsen 1 eine parallel zu den Seitenwänden 3 des Lagerbocks 2 angeordnete, umlaufende Nut 8 auf. Die parallelen Schenkel 5 weisen quer zur Achsrichtung einer Öffnung 9 auf, die die Form zweier in crashbedingter Verformungsrichtung hintereinanderliegender, sich peripher hälftig überschneidender Kreise mit unterschiedlichem Durchmesser haben. Dabei entspricht der Durchmesser des in Verformungsrichtung vorne liegenden Halbkreises dem Durchmesser des Nutgrundes und der Durchmesser des dahinterliegenden Kreises mindestens dem Außendurchmesser des verdickten Endes der Teilachse 1. Die Teilachse 1 ist im Ausgangszustand vor crashbedingter Verformung mit ihrer Nut 9 im kleineren Öffnungskreis festgelegt. Zwischen den Teilachsen 1 sind hintereinander zwei Druckfedern 10 angeordnet, die durch einen parallel zu den inneren Stirnflächen der Teilachsen 1 verlaufenenden Innensteg 12 eines Lagerrohrs 11 getrennt sind und sich an diesem abstützen. Das Lagerrohr 11 des Pedals erstreckt sich zwischen den Seitenwänden 3 des Lagerbocks 2 und ist auf den in den Lagerbock 2 hineinragenden Abschnitten der Teilachsen 1 gelagert. Die Klammer 4 ist einstückig mit dem nicht dargestellten Bügel 6, der an einem crashstabilen Karosserieteil festgelegt ist, verbunden.

In der Ausgangslage vor einem Crash sind die Teilachsen 1 an den parallelen Schenkeln 5, die fest an der Seitenwand 3 des Lagerbocks 2 anliegen, dadurch festgelegt, daß sie mit ihrer umlaufenden Nut 8 im kleineren Halbkreis der Öffnung 9 eingeklinkt sind. Die parallelen Schenkel 5 der Klammer 4 sind in diesem Ausführungsbeispiel entweder steif oder von einer vielfach höheren Federsteifigkeit als die Druckfedern 10. Dadurch werden die durch die Druckfedern 10 vorgespannten Teilachsen 1 solange in dieser Position festgehalten, wie die Nut 8 im kleineren Halbkreis festgeklinkt ist Tritt nun eine crashbedingte Verformung der (nicht dargestellten) Spritzwand und damit eine Bewegung des Lagerbocks in den Fußraum des Kfz hinein ein, nimmt der Lagerbock 2 mit seiner umschließenden Lagerung der Teilachsen in den Seitenwänden 3 die Pedalachse mit nach vorne. Dadurch werden die Teilachsen 1 innerhalb der Öffnung 9 soweit nach vorne verschoben, daß die verdickten Enden nun in dem Teil der Öffnung positioniert sind, dessen Durchmesser mindestens dem Außendurchmesser der verdickten Enden entspricht. Dadurch ist die Festlegung der Teilachsen 1 an den parallelen Schenkeln 5 aufgehoben und die Teilachsen 1 können durch die vorgespannten Druckfedern 10 nach außen geschoben werden, so daß keine Abschnitte der Teilachsen 1 mehr in den Innenraum des Lagerbocks zwischen den Seitenwänden 3 hineinragen. Damit entfällt das Auflager des Pedallagerrohrs 11, das damit frei bewegbar ist. Es wird in einem solchen Fall auf den Boden des Fußraumes fallen und nicht mehr in den Fußraum hineinragen.

### Bezugszeichenliste

- 1: Teilachse
- 2: Lagerbock
- 3: Seitenwände des Lagerbocks
- 4: Klammer
- 5: parallele Schenkel der Klammer
- 6: Bügel
- 7: verdicktes Ende der Teilachsen
- 8: Nut mit verdicktem Ende
- 9: Öffnung
- 10: Druckfeder
- 11: Pedallagerrohr
- 12: Innensteg
- 13: Endabschnitte des Bügels
- 14: Verbindungsbohrung mit parallelen Schenkel
- 15: Ausbuchtung der parallelen Schenkel
- 16: crashbedingter Verformungsweg

## Patentansprüche

1. Pedallagerung für Kraftfahrzeuge mit einer in Achsrichtung beabstandete Teilachsen (1) aufweisenden Pedalachse und einem Lagerbock (2), in dem die Pedalachse umschlossen gelagert ist, wobei der Lagerbock (2) an einem crashverformbaren Karosserieteil, insbesondere einer vorderen Spritzwand, befestigt ist und ein mit einem crashstabilen Karosserieteil, insbesondere einem Querträger, verbundener Bügel (6) mit Teilen der Pedallagerung in Eingriff steht,
**dadurch gekennzeichnet, daß**
die Teilachsen (1) mit parallelen, an Seitenwänden (3) des Lagerbocks (2) außen anliegenden Schenkeln (5) einer Klammer (4) verbunden sind und auf die Teilachsen (1) in Achsrichtung Federkräfte einwirken.

2. Pedallagerung gemäß Anspruch 1, **dadurch gekennzeichnet, daß**, zwischen den Teilachsen (1) in Achsrichtung mindestens eine gespannte Druckfeder (10) angeordnet ist und gegen die inneren Stimfllächen der Teilachsen (1) anliegt, die parallelen Schenkel (5) der Klammer (4) fest mit dem Bügel (6) verbunden sind und die Teilachsen (1) an ihrem über die Seitenwände (3) des Lagerbocks (2) nach außen überstehenden Ende ein verdicktes Ende (7) aufweisen, das mit den parallelen Schenkeln (5) eine Vorrichtung zur lösbaren Festlegung der Teilachsen (1) an den Schenkeln (5) bildet.

3. Pedallagerung gemäß Anspruch 2, **dadurch gekennzeichnet, daß** die Vorrichtung zur lösbaren Festlegung der Teilachsen (1) dadurch gebildet wird, daß die verdickten Enden (7) eine parallel zu den Seitenwänden (3) angeordnete, umlaufende Nut (8) aufweisen und die parallelen Schenkel (5) quer zur Achsrichtung eine Öffnung (9) in Form zweier in crashbedingter Verformungsrichtung hintereinanderliegender, sich peripher hälftig überschneidender Kreise mit . unterschiedlichem Durchmesser aufweisen, wobei der Durchmesser des in Verformungsrichtung vorne liegenden Halbkreises dem Durchmesser des Nutgrundes und der Durchmesser des dahinterliegenden Kreises mindestens dem Außendurchmesser des verdickten Endes (7) der Teilachse entspricht (1), und wobei die Teilachse (1) im Ausgangszustand vor crashbedingter Verformung mit ihrer Nut (8) im kleineren Öffnungskreis festgelegt ist.

4. Pedallagerung gemäß Anspruch 3, **dadurch gekennzeichnet, daß** zwischen den Teilachsen (1) hintereinander mindestens zwei Druckfedern (10) angeordnet sind, die durch mindestens einen parallel zu den inneren Stirnflächen der Teilachsen (1) verlaufenden Innensteg (12) eines Pedattagerrohrs getrennt und abgestützt sind, wobei das Pedallagerrohr des Pedals sich zwischen den Seitenwänden (3) des Lagerbocks (2) erstreckt und auf den in den Lagerbock (2) hineinragenden Abschnitten der Teilachsen (1) gelagert ist.

5. Pedallagerung gemäß Anspruch 1, **dadurch gekennzeichnet, daß** die parallelen Klammerschenkel (5) federnd sind und in Verformungsrichtung hinter der Verbindungsstelle (14) mit den Teilachsen (1) schräg zu den Lagerbockseitenwänden (3) V-förmig auseinanderlaufend abgebogen sind und an Stirnseiten der in gleicher Richtung angeordneten, komplementär zu den Klammerschenkeln (5) verlaufenden Endabschnitte des Bügels (6) anliegen.

6. Pedallagerung gemäß Anspruch 5, **dadurch gekennzeichnet, daß** die parallelen Klammerschenkel (5) parallel zu den Rändern eine wulstförmige Ausbuchtung (15) aufweisen, die die Verbindungsstelle (14) mit dem verdickten Ende (7) der Teilachse (1) auf mindestens drei Seiten umgibt.

## Claims

1. A pedal support for motor vehicles having
a pedal spindle which has partial spindles (1) spaced apart in the axial direction,
a bracket (2) in which the pedal spindle is mounted in an enclosed manner, the bracket (2) being fastened to a crash-deformable bodywork part, in particular to a front splash wall, and
a stay (6) which is connected to a crash-stable bodywork part, in particular to a crossmember, being in engagement with parts of the pedal support,
**characterized in**
**that** the partial spindles (1 ) are connected to parallel limbs (5) of a clamp (4), which limbs bear against the outside of side walls (3) of the bracket (2), and spring forces act on the partial spindles (1 ) in the axial direction.

2. The pedal support as claimed in claim 1, **characterized in that** at least one tensioned compression spring (10) is arranged in the axial direction between the partial spindles (1 ) and bears against the inner end surfaces of the partial spindles (1 ), the parallel limbs (5) of the clamp (4) being connected fixedly to the stay (6), and the partial spindles (1) having a thickened end (7) protruding outward over the side walls (3) of the bracket (2), which thickened end together with the parallel limbs (5) forms a device for releasably fixing of the partial spindles (1 ) on the limbs (5).

3. The pedal support as claimed in claim 2, **characterized in that** the device for the releasable fixing of the partial spindles (1) is formed by the thickened ends (7) having a circumferential groove (8) arranged parallel to the side walls (3) and the parallel limbs (5) having, transversely to the axial direction, an opening (9) in the form of two circles which differ in diameter, are situated one behind the other in a crash-induced deformation direction and half overlap peripherally, the diameter of the semicircle which lies in front in the deformation direction corresponding to the diameter of the base of the groove and the diameter of the circle lying behind it corresponding at least to the outside diameter of the thickened end (7) of the partial spindle (1) , and in the initial state before a crash-induced deformation, the partial spindle (1 ) being fixed with its groove (8) in the smaller opening circle.

4. The pedal support as claimed in claim 3, **characterized in that** at least two compression springs (10) are arranged one behind the other between the partial spindles (1), said compression springs being separated and supported by at least one internal web (12) of a pedal bearing tube, which internal web runs parallel to the inner end surfaces of the partial spindles (1 ), the pedal bearing tube of the pedal extending between the side walls (3) of the bracket (2) and being mounted on those sections of the partial spindles (1) which project into the bracket (2).

5. The pedal support as claimed in claim 1, **characterized in that** the parallel clamp limbs (5) are resilient and, to the rear, in the deformation direction, of the connecting point (14) to the partial spindles (1 ), are bent obliquely to the bracket side walls (3) in a manner such that they diverge in the shape of a V and bear against end sides of those end sections of the stay (6) which are arranged in the same direction and run in a complementary manner to the clamp limbs (5).

6. The pedal support as claimed in claim 5, **characterized in that** the parallel clamp limbs (5) have, parallel to the edges, a bead-shaped bulge (15) which surrounds the connecting point (14) to the thickened end (7) of the partial spindle (1) on at least three sides.

## Revendications

1. Suspension de pédale pour véhicules automobiles, dans laquelle l'axe de la pédale comporte des axes secondaires (1 ) distants axialement, et qui comporte un support de palier (2) dans lequel l'axe de la pédale est monté en étant enfermé, le support de palier (2) étant fixé sur une partie de la carrosserie déformable lors d'une collision, en particulier sur un tableau d'auvent avant, et un étrier (6), relié à une partie de la carrosserie stable lors d'une collision, en particulier à une barre transversale, étant en engagement avec des parties de la suspension de pédale,
**caractérisée en ce que**
les axes secondaires (1 ) sont reliés à des branches parallèles (5) d'une bride (4), qui portent à l'extérieur contre des parois latérales (3) du support de palier (2), et des forces élastiques exercent axialement une action sur les axes secondaires (1 ).

2. Suspension de pédale selon la revendication 1, **caractérisée en ce que** au moins un ressort de compression contraint (10) est disposé axialement entre les axes secondaires (1 ) et porte contre les surfaces frontales intérieures des axes secondaires (1 ), les branches parallèles (5) de la bride (4) sont reliées fixes à l'étrier (6) et les axes secondaires (1) présentent à leur extrémité saillant à l'extérieur au dessus des parois latérales (3) du support de palier (2) une extrémité renflée (7) qui forme avec les branches parallèles (5) un dispositif destiné à fixer de façon amovible les axes secondaires (1 ) aux branches (5).

3. Suspension de pédale selon la revendication 2, **caractérisée en ce que** le dispositif destiné à fixer de façon amovible les axes secondaires (1 ) est conformé de telle sorte que les extrémités renflées comportent une gorge (8) périphérique disposée parallèlement aux parois latérales (3) et les branches parallèles (5) présentent transversalement à la direction axiale une ouverture (9) se présentant sous la forme de deux cercles de diamètre différents qui gant disposés l'un derrière l'autre par référence au sens de déformation lors d'une collision et qui se coupent à moitié périphériquement, le diamètre du demi-cercle avant, par référence au sens de déformation, correspondant au diamètre du fond de la gorge et le diamètre du cercle arrière correspondant au moins au diamètre extérieur de l'extrémité renflée (7) de l'axe secondaire (1), et l'axe secondaire (1 ) étant fixé à l'état initial, avant déformation lors d'une collision, de façon à ce que sa gorge (8) soit dans le cercle d'ouverture plus petit.

4. Suspension de pédale selon la revendication 3, **caractérisée en ce que** au moins deux ressorts de compression (1) sont agencés l'un derrière l'autre entre les axes secondaires (1 ) et sont supportés et séparés par au moins une nervure intérieure (12) d'un tube formant palier de pédale s'étendant parallèlement aux surfaces frontales intérieures des axes secondaires (1 ), le tube formant palier de pédale s'étendant entre les parois latérales (3) du support de palier (2) et étant monté sur les portions des axes secondaires (1 ) qui font saillie dans le support de palier (2).

5. Suspension de palier selon la revendication 1, **caractérisée en ce que** les branches parallèles (5) de la bride sont élastiques et sont écartées de façon à être inclinées par rapport aux parois latérales (3) du support de palier et de façon à former un V en arrière de la liaison (14) avec les axes secondaires (1 ) par référence au sens de déformation et portent contre des parois frontales des portions d'extrémité de l'étrier (6) agencées dans une même direction et s'étendant complémentairement aux branches (5) de la bride.

6. Suspension selon la revendication 5, **caractérisée en ce que** les branches parallèles (5) de la bride comportent parallèlement aux bords une courbure (15) en forme de bourrelet qui entoure sur au moins trois côtés la liaison (14) dotée de l'extrémité renflée (7) de l'axe secondaire (1 ).
